# EUROPEAN PATENT APPLICATION

(11) **EP 1 940 165 A2**
(43) Date of publication of application: **02.07.2008**
(21) Application number: 07107034.6
(22) Date of filing: 26.04.2007
(51) Int. Cl.: H04N 5/92

(54) **Digital video recorder, multimedia storage apparatus, and method thereof**

(30) Priority: 28.12.2006 US 617231
(71) Applicant: MediaTek Inc., 1st Science-Based Industrial Park Hsin-Chu 300 (TW)
(72) Inventor: Chou, Yu-Chieh, Hsinchu City 300 (TW); Hsieh, Yu-Ching, Taipei City (TW)
(74) Representative: Viering, Jentschura & Partner

(57) **Abstract**

A multimedia storage apparatus comprises a demultiplexer (101), a stream converter (103), and a memory (105). The demultiplexer (101) separates A/V data (104) and auxiliary data (106) from a first stream (102), while the stream converter (103) converts the A/V data (104) into a second stream (110). The memory (105) then stores the auxiliary data (106). A multimedia storage method comprises the following steps: separating A/V data and auxiliary data from a first stream; converting the A/V data into a second stream; and storing the auxiliary data for display.

## Description

### CROSS-REFERENCES TO RELATED APPLICATIONS

Not applicable

### BACKGROUND OF THE INVENTION

### Field of the Invention

The present invention relates to a digital video recorder, a multimedia storage apparatus, and a method thereof; in particular, the invention relates to a digital video recorder, a multimedia storage apparatus, and a multimedia storage method for recording auxiliary data during format conversion.

### Descriptions of the Related Art

The technology for processing multimedia has progressed over time, with various usages of multimedia storage apparatuses for recording multimedia. A commonly desired multimedium for recording is a television program. In addition to conventional analog TV systems, digital TV (DTV) systems have become popular because of its high display quality and more importantly, its ability to provide more signals. Contrar y to an analog TV system, the content carried by DTV channels may comprise information other than programs themselves. More specifically, the information can be attached to a DTV program signal to provide optional language captions, optional fields of view, EPGs (electronic program guides), real-time stock quotes, weather forecasts, and so on.

A DTV program may be recorded in a DVD disc with a DVD recorder. The DTV program is formed by a series of transport streams (TS), each of which is constructed from packetized elementary stream packets (PES packets). Data stored in the DVD format are carried by program streams ( PSs) each of which is also constructed from PES packets. Therefore, when a DTV program is recorded on a DVD disc, the TSs require conversion into PSs. However, not all of the information in a TS can be recorded in a PS appropriately. For example, there is no column in a PS that is defined to record auxiliary data of a DTV program, wherein the auxiliary data comprises DVB subtitles, teletexts or closed captioning of the DTV program. Thus, the auxiliary data in a DTV program would be lost after it is recorded in the DVD format.

Accordingly, a solution that records multimedia streams without losing auxiliary data is desired in this industry field.

### SUMMARY OF THE INVENTION

An object of this invention is to provide a multimedia storage apparatus. The multimedia storage apparatus comprises a demultiplexer, a stream converter, and a memory. The demultiplexer separates A/V data and auxiliary data from a first stream. The stream converter converts the A/V data into a second stream. The memory stores the auxiliary data.

Another object of this invention is to provide a multimedia storage method. The multimedia storage method comprises the following steps: separating A/V data and auxiliary data from a first stream; converting the A/V data into a second stream; and storing the auxiliary data for display.

Another object of this invention is to provide a digital video recorder. The digital video recorder comprises a demultiplexer, a stream converter, and a memory. The demultiplexer separates A/V data and auxiliary data from a first stream. The stream converter converts the A/V data into a second stream. The memory stores the auxiliary data before the second stream is displayed.

Another object of this invention is to provide a multimedia storage apparatus. The multimedia storage apparatus comprises: means for separating A/V data and auxiliary data from a first stream; means for converting the A/V data into a second stream; and means for storing the auxiliary data.

The present invention separates A/V data and auxiliary data from a multimedia stream, and stores the auxiliary data before the multimedia stream is recorded or converted into another format. The auxiliary data, hence, can still be shown even if the multimedia stream is recorded or converted into another format.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** shows a first embodiment in accordance with the present invention;
**FIG. 2** shows a flow chart of a second embodiment in accordance with the present invention.
**FIG. 3** shows a third embodiment in accordance with the present invention; and
**FIG. 4** shows a flow chart of a fourth embodiment in accordance with the present invention

### DESCRIPTION OF THE PREFERRED EMBODIMENT

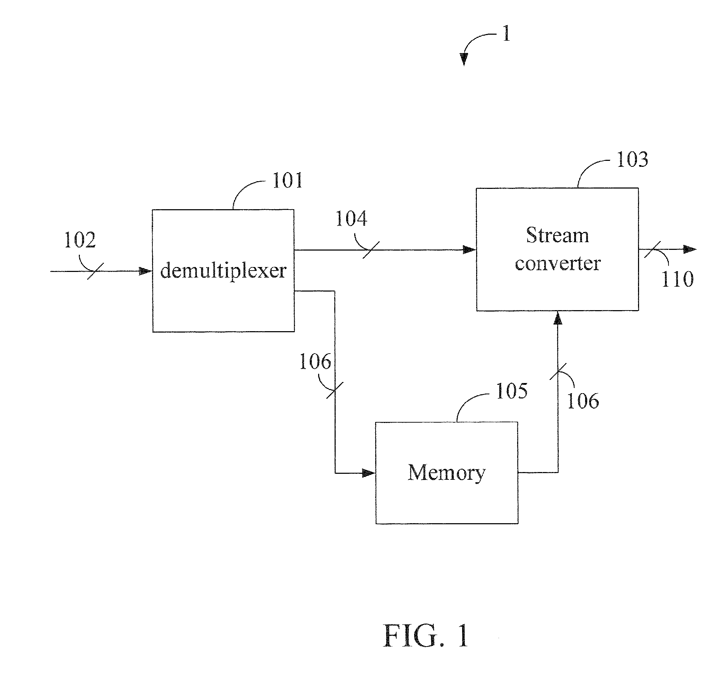

A first embodiment of the present invention is a multimedia storage apparatus. In this embodiment, the multimedia storage apparatus is a digital video recorder 1, such as a DVD recorder as FIG. 1 shows. The digital video recorder 1 comprises a demultiplexer 101, a stream converter 103, and a memory 105. The demultiplexer 101 receives a first stream 102 from a multimedia source, and then separates A/V (audio and/or video) data 104 and auxiliary data 106 from the first stream 102. The multimedia source is a DTV source, and the first stream 102 comes from the TS of a DTV program in the DTV source. The auxiliary data 106 is any other data aside from the A/V data 104 in the first stream 102. Moreover, the A/V data 104 is formed by an A/V PES, while the auxiliary data 106 is formed by an auxiliary PES. The stream converter 103 receives and converts the A/V data 104 into a second stream 110, wherein the second stream 110 is a PS. The memory 105 then stores the auxiliary data 106. When a user records the first stream 102 to a DVD disc, the stream converter 103 further retrieves the auxiliary data 106 from the memory 105 and then converts the auxiliary data 106 into a text-based file or a pixel-based file. After the conversion, the stream converter 103 stores or combines the text-based file or the pixel-based file in a private field of the PS. The information in the A/V data 104 and the auxiliary data 106 are stored in the second stream 110 thereby. Then, the second stream 110 can be recorded on to a DVD disc or directly displayed by the digital video recorder 1 if the digital video recorder 1 supports display operation. Since the auxiliary data 106 is preserved in the second stream 110, users can access the auxiliary data 106 after the first stream 102 is converted.

The auxiliary data 106 may comprise many kinds of information, such as time information, character information, information of character position, color information, pixel information, EPG information, teletext information, teletext page indices, DVB subtitles, and/or closed captions. For example, the auxiliary data 106 may comprise any of the following: a PAT (Program Association Table), a PMT (Program Map Table), a CAT (Conditional Access Table), an NIT (Network Information Table) of a PSI (Program Specific Information), a BAT (bouquet allocation table), an EIT (event information table), an RST (running status table), a TDT (time and date table) of an SI (service information) of a digital video broadcasting (DVB) system, an STT (system time table), an MGT (master guide table), or an ETT (extended text table) of a PS1P (program and system information protocol).

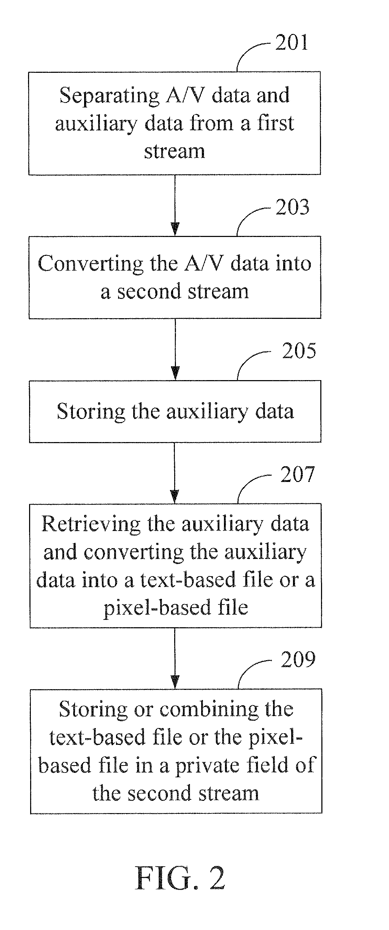

A second embodiment of the present invention is a multimedia storage method adapted for a multimedia storage apparatus like the first embodiment. FIG. 2 shows a flow chart of the second embodiment. In step 201, separating A/V data and auxiliary data from a first stream is executed, wherein the first stream is a TS. Step 203 converts the A/V data into a second stream, wherein the second stream is a PS. Step 205 is executed to store the auxiliary data. Then, step 207 is executed wherein the auxiliary data is retrieved and then converted into a text-based file or a pixel-based file. Finally, step 209 is executed to store or combine the text-based file or the pixel-based file in a private field of the second stream. The information in the A/V data and the auxiliary data are stored in the second stream thereby.

In addition to the steps shown in FIG. 2, the second embodiment is able to execute all of the operations or functions recited in the first embodiment. Those skilled in the art can straightforwardly realize how the second embodiment performs these operations and functions based on the above descriptions of the first embodiment. Therefore, the descriptions for these operations and functions are redundant and not repeated herein.

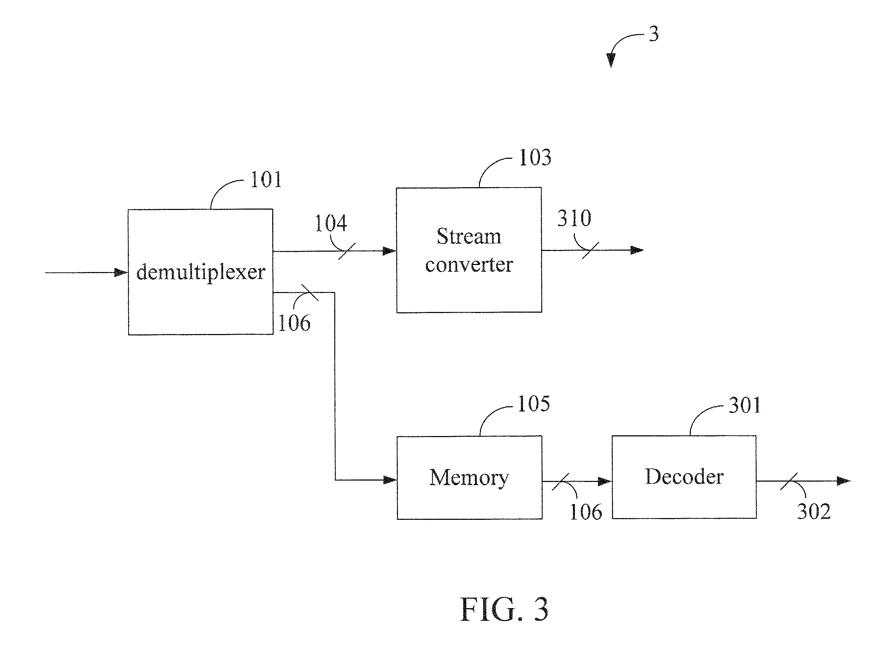

A third embodiment of the present invention is a multimedia storage apparatus 3 shown in FIG. 3. The digital video recorder 3 also comprises a demultiplexer 101, a stream converter 103, a memory 105, and a decoder 301. The functions of the demultiplexer 101, the stream converter 103, and the memory 105 are similar to those of the corresponding elements in the first embodiment.

The difference between the digital video recorder 3 and the digital video recorder 1 is how the auxiliary data 106 is processed. Instead of being stored in the private field of the PS by the stream converter 103, the auxiliary data 106 in the third embodiment is decoded into a third stream 302, which can be a text-based or a pixel-based file, by the decoder 301. In other words, the second stream 310 will end up only comprising information in the A/V data 104. Both the second stream 310 and the third stream 302 are recorded onto a DVD disc. Therefore, the information in the auxiliary data 106 can also be retrieved by accessing the third stream 302 from the DVD disc. By storing the data in the third stream 302, the information in the auxiliary data 106 can be displayed after the conversion.

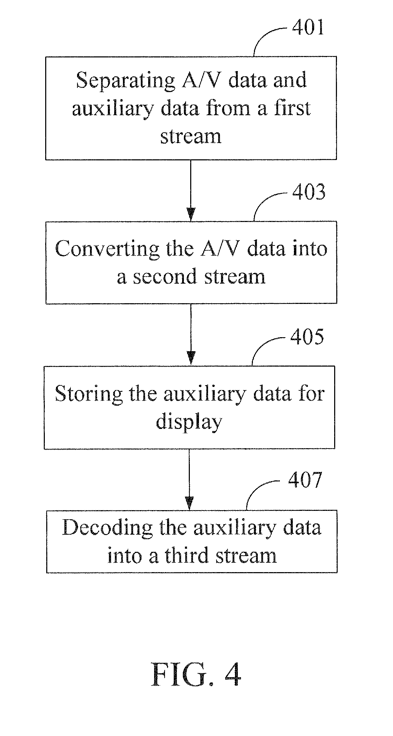

A fourth embodiment of the present invention is a multimedia storage method adapted for a multimedia storage apparatus like the third embodiment. FIG. 4 shows a flow chart of the fourth embodiment. In step 401, separating the A/V data and auxiliary data from a first stream is executed, wherein the first stream is a TS. S tep 403 converts the A/V data into a second stream, wherein the second stream is a PS. S tep 405 is executed to store the auxiliary data for display. Then, step 407 is executed to decode the auxiliary data into a third stream, in which the third stream may be a text-based or a pixel-based file. Thu s, the A/V data and auxiliary data are converted or decoded into different streams.

In addition to the steps shown in FIG. 4, the fourth embodiment is able to execute all of the operations or functions recited in the third embodiment. Those skilled in the art can straightforwardly realize how the fourth embodiment performs these operations and functions based on the above descriptions of the third embodiment. Therefore, the descriptions for these operations and functions are redundant and not repeated herein.

The present invention separates the A/V data and auxiliary data of a multimedia stream and stores the auxiliary data before the multimedia stream is recorded or converted into another format. The auxiliary data, hence, can still be shown even if the multimedia stream is recorded or converted into another format.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A multimedia storage apparatus, comprising:
a demultiplexer for separating A/V data and auxiliary data from a first stream;
a stream converter for converting the A/V data into a second stream; and
a memory for storing the auxiliary data.

2. The multimedia storage apparatus as claimed in claim 1, wherein the auxiliary data is the data other than the A/V data in the first stream.

3. The multimedia storage apparatus as claimed in claim 1, wherein the first stream is a transport stream.

4. The multimedia storage apparatus as claimed in claim 1, wherein the second stream is a program stream.

5. The multimedia storage apparatus as claimed in claim 1, wherein the auxiliary data is stored in a private field of the second stream.

6. The multimedia storage apparatus as claimed in claim 5, wherein the private field is in a program stream.

7. The multimedia storage apparatus as claimed in claim 1, wherein the auxiliary data is stored in a third stream.

8. The multimedia storage apparatus as claimed in claim 1, wherein the auxiliary data comprises time information.

9. The multimedia storage apparatus as claimed in claim 1, wherein the auxiliary data comprises character information.

10. The multimedia storage apparatus as claimed in claim 1, wherein the auxiliary data comprises information of character position.

11. The multimedia storage apparatus as claimed in claim 1, wherein the auxiliary data comprises color information

12. The multimedia storage apparatus as claimed in claim 1, wherein the auxiliary data comprises pixel information.

13. The multimedia storage apparatus as claimed in claim 1, wherein the auxiliary data comprises EPG information.

14. The multimedia storage apparatus as claimed in claim 1, wherein the auxiliary data comprises teletext information.

15. The multimedia storage apparatus as claimed in claim 1, wherein the auxiliary data is a teletext page index.

16. The multimedia storage apparatus as claimed in claim 1, wherein the auxiliary data is a DVB subtitle.

17. The multimedia storage apparatus as claimed in claim 1, wherein the auxiliary data is a closed caption.

18. A multimedia storage method, comprising:
separating A/V data and auxiliary data from a first stream;
converting the A/V data into a second stream; and
storing the auxiliary data for display.

19. The multimedia storage method as claimed in claim 18, wherein the auxiliary data is the data other than the A/V data in the first stream.

20. The multimedia storage method as claimed in claim 18, wherein the first stream is a transport stream.

21. The multimedia storage method as claimed in claim 18, wherein the second stream is a program stream.

22. The multimedia storage method as claimed in claim 18, wherein the auxiliary data is stored in a private field of the second stream.

23. The multimedia storage method as claimed in claim 22, wherein the private field is in a program stream.

24. The multimedia storage method as claimed in claim 18, wherein the auxiliary data is stored in a third stream.

25. The multimedia storage method as claimed in claim 18, wherein the auxiliary data comprises time information.

26. The multimedia storage method as claimed in claim 18, wherein the auxiliary data comprises character information.

27. The multimedia storage method as claimed in claim 18, wherein the auxiliary data comprises information of character positions.

28. The multimedia storage method as claimed in claim 18, wherein the auxiliary data comprises color information.

29. The multimedia storage method as claimed in claim 18, wherein the auxiliary data comprises pixel information.

30. The multimedia storage method as claimed in claim 18, wherein the auxiliary data comprises EPG information.

31. The multimedia storage method as claimed in claim 18, wherein the auxiliary data comprises teletext information.

32. The multimedia storage method as claimed in claim 18, wherein the auxiliary data is a teletext page index.

33. The multimedia storage method as claimed in claim 18, wherein the auxiliary data is a DVB subtitle.

34. The multimedia storage method as claimed in claim 18, wherein the auxiliary data is a closed caption.

35. A digital video recorder, comprising:
a demultiplexer for separating A/V data and auxiliary data from a first stream;
a stream converter for converting the A/V data into a second stream; and
a memory for storing the auxiliary data before the second stream is displayed.

36. A multimedia storage apparatus, comprising:
means for separating A/V data and auxiliary data from a first stream;
means for converting the A/V data into a second stream; and
means for storing the auxiliary data.
